# EUROPÄISCHE PATENTSCHRIFT

(11) **EP 1 141 573 B1**
(45) Veröffentlichungstag und Bekanntmachung des Hinweises auf die Patenterteilung: **27.08.2003**
(21) Anmeldenummer: 99966828.8
(22) Anmeldetag: 01.12.1999
(51) Int. Cl.: F16D 65/16, B60T 13/74

(54) **VERFAHREN ZUM STEUERN EINES ELEKTROMECHANISCHEN RADBREMSAKTORS IN EINEM KRAFTFAHRZEUG**
METHOD OF CONTROLLING AN ELECTROMECHANICAL WHEEL BRAKE ACTUATOR IN A MOTOR VEHICLE
PROCEDE DE COMMANDE POUR ACTEUR DE FREIN SUR ROUE ELECTROMECANIQUE DANS UNE AUTOMOBILE

(30) Priorität: 18.12.1998 DE 19858763
(43) Veröffentlichungstag der Anmeldung: 10.10.2001
(73) Patentinhaber: SIEMENS AKTIENGESELLSCHAFT, 80333 München (DE)
(72) Erfinder: DOERICHT, Michael, D-93138 Lappersdorf (DE)
(86) Internationale Anmeldenummer: DE9903844
(87) Internationale Veröffentlichungsnummer: WO00037817

(56) Entgegenhaltungen:
- DE-A- 19 508 253
- DE-A- 19 536 694
- DE-A- 19 638 921
- US-A- 4 602 702
- US-A- 5 090 518
- PATENT ABSTRACTS OF JAPAN vol. 1995, no. 09, 31. Oktober 1995 (1995-10-31) & JP 07 144636 A (AKEBONO BRAKE RES & DEV CENTER LTD), 6. Juni 1995 (1995-06-06)

## Beschreibung

Die Erfindung betrifft ein Verfahren nach dem Oberbegriff von Anspruch 1. Es dient zum Steuern eines elektromechanischen Radbremsaktors in einem Kraftfahrzeug, der einen von einem Elektromotor in Richtung auf eine Bremsscheibe angetriebenen Bremskolben enthält, durch den zwei Bremsbeläge gegen eine Bremsscheibe gedrückt oder von dieser gelöst werden.

Die bei Kraftfahrzeugen heutzutage zunehmenden Anforderungen an ein modernes Bremssystem - mit dem unter anderem Antiblockiereinrichtungen, Fahrstabilitätsregelungen, Antriebsschlupfregelungen oder Traktionskontrollen realisiert werden müssen - machen radselektive Bremseneingriffe erforderlich. Dies wird bisher mit konventionellen hydraulischen Bremsanlagen durchgeführt, die eine Reihe von Nachteilen aufweisen.

Bekannt sind deshalb auch elektrisch gesteuerte und betätigte Kraftfahrzeugbremsen (DE 196 29 936 C1; US 4 784 224), die die Nachteile hydraulischer Bremsanlagen, wie Schwingungsprobleme in den Hydraulikleitungen, Dichtigkeitsprobleme, hoher Aufwand usw. nicht aufweisen. Zum Erreichen der erheblichen Zuspannkräfte, die an einer Scheibenbremse eines modernen Kraftfahrzeugs aufzubringen sind, um die nötigen hohen Bremsverzögerungen zu erreichen (die Kräfte liegen an der Vorderachse im Bereich von 30 bis 50 kN), sind die mechanischen Teile der Bremsen sehr hohen Belastungen ausgesetzt. Insbesondere wirken die hohen Kräfte während des Zuspannvorgangs auch auf bewegte Teile - Rollen, Lager, Spindelstangen und -muttern, Rampen, usw. -, was zu erheblichen Reibungsverlusten führt. Bei einem Bremsaktor für elektrisch betätigte Fahrzeugbremsen etwa muß der Motor unmittelbar das gesamte Lagerreibmoment aufbringen, da keine Übersetzung vorgesehen ist, die das Lagerreibmoment auf der Motorseite herabsetzen könnte (DE 196 07 295 C1). Außerdem erfordern die hohen Kräfte eine entsprechend stabile Ausführung der mechanischen Komponenten.

Aus der Druckschrift DE 195 08 253 A1 ist ein Verfahren zum Betätigen einer elektrischen Bremsanlage bekannt, bei dem der Bremskolben durch einen Elektromotor mit einer unter einem vorgegebenen Wert liegenden Zuspannkraft bewegt und nach Erreichen des vorgegebenen Werts der Zuspannkraft durch ein piezoelektrisches Element mit einer über dem vorgegebenen Wert liegenden Zuspannkraft gegen die Bremsbeläge gedrückt wird.

Des Weiteren ist eine elektrische Bremsanlage bekannt (US 5 090 518), bei der der Bremskolben über eine selbsthemmend ausgelegte Gewindepaarung zunächst von einem Elektromotor angetrieben wird. Nach Erreichen der Maximalkraft des Elektromotors kann der Bremskolben durch ein zusätzliches piezoelektrisches Element angetrieben werden.

Der Erfindung liegt das technische Problem zugrunde, ein Verfahren zum Betätigen einer elektrischen Bremsanlage zu schaffen, mit dem Radbremsaktoren gesteuert werden können, ohne daß bei ihnen hohe Reibungskräfte auftreten, und mit dem eine Feststellbremsfunktion auf einfache Weise realisiert werden kann.

Dieses Problem wird erfindungsgemäß durch das Verfahren nach Anspruch 1 gelöst. Dabei wird der Bremskolben durch den Elektromotor mit einer unter einem vorgegebenen Wert liegenden Zuspannkraft bewegt und nach Erreichen des vorgegebenen Wertes der Zuspannkraft durch ein piezoelektrisches Element mit einer über dem vorgegebenen Wert liegenden Zuspannkraft gegen die Bremsbeläge gedrückt.

Ein elektromechanischer Radbremsaktor, mit dem das erfindungsgemäße Verfahren zweckmäßigerweise durchgeführt werden kann, ist in einer am gleichen Tage eingereichten Patentanmeldung (Parallelanmeldung, unser Zeichen GR 98 E 5953 DE) beschrieben.

Die Vorteile der Erfindung liegen unter anderem darin, daß sie die hohen Kosten, die durch Verwendung hochwertiger Werkstoffe und aufwendiger Fertigungsverfahren verursacht werden, vermeidet. Eine Verwendung hoher Materialstärken der Bremsbetätigungseinrichtung, die wegen der großen Zuspannkräfte bei bekannten Bremsanlagen erforderlich sind, und von Elektromotoren mit hohem Gewicht, wird durch die Erfindung ebenfalls vermieden.

Ein Ausführungsbeispiel der Erfindung wird im folgenden anhand der Zeichnungen erläutert. Es zeigen:
- Figur 1: einen zum Durchführen des erfindungsgemäßen Verfahrens geeigneten Radbremsaktor in Blockdiagrammdarstellung;
- Figur 2: eine Diagrammdarstellung des durch Bremsbeläge des Radbremsaktors nach Figur 1 aus der Ruhestellung heraus zurückgelegten Weges in Abhängigkeit von der Zuspannkraft des Bremssattels;
- Figur 3: eine Diagrammdarstellung der von einem piezoelektrischen Element erzeugten Kraft in Abhängigkeit von der an das piezoelektrische Element angelegten elektrischen Spannung;
- Figur 4: die Steuerung des Radbremsaktors gemäß Figur 1 als Blockschaltbild;
- Figur 5: ein Ablaufdiagramm eines ersten Teiles des erfindungsgemäßen Verfahrens (Betätigen und Lösen der Bremse mit einem Radbremsaktor);
- Figur 6: ein Ablaufdiagramm eines zweiten Teils des erfindungsgemäßen Verfahrens (Betätigen der Feststellbremse mit einem Radbremsaktor);
- Figur 7: ein Ablaufdiagramm eines dritten Teils des erfindungsgemäßen Verfahrens (Lösen der Feststellbremse mit einem Radbremsaktor), und
- Figur 8: ein Ablaufdiagramm eines vierten Teils eines erfindungsgemäßen Verfahrens (Betätigen der Feststellbremse mit dem Radbremsaktor).

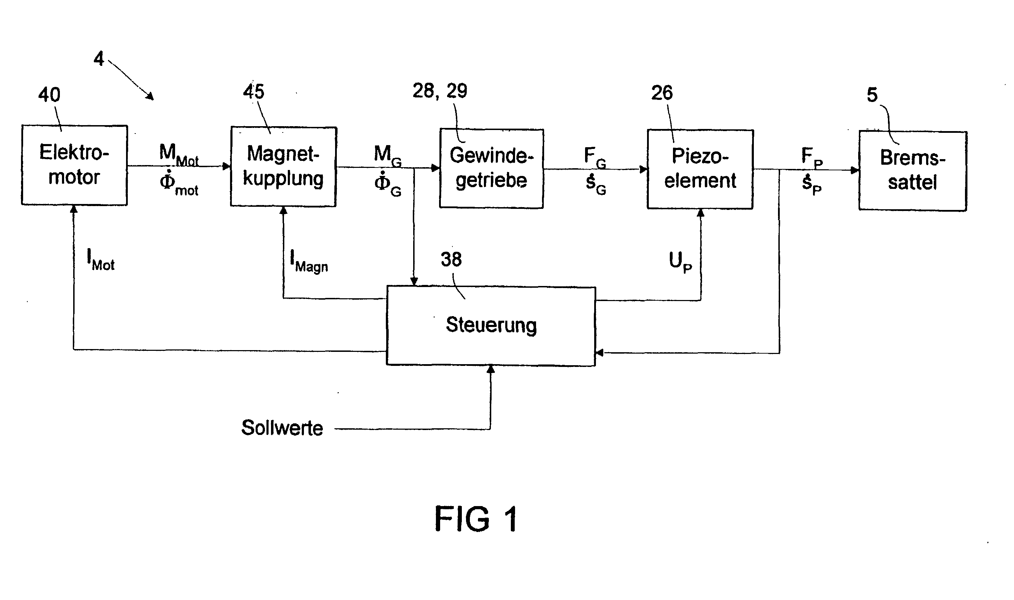

Das erfindungsgemäße Verfahren wird zweckmäßigerweise auf eine Bremsanlage angewandt, wie sie in der vorne genannten Paralellanmeldung eingehend beschrieben ist. Sie weist an jedem Rad einen Radbremsaktor 4 (Figur 1) für Schwimm- bzw. Faustsattel-Scheibenbremsen auf. Der Radbremsaktor 4 (Figur 1) - im folgenden auch als -aktuator oder Aktor bezeichnet - ist hier nur schematisch dargestellt, wobei die Bezugszeichen soweit möglich denen der Paralellanmeldung entsprechen. Er weist einen Elektromotor 40, eine Magnetkupplung 45, ein aus einem Gewinde 28 und einer Gewindemutter 29 bestehendes Gewindegetriebe, ein piezoelektrisches Element, im folgenden als Piezoelement 26 bezeichnet, und eine elektronische Steuer- und Leistungsschaltung, im folgenden als Steuerung 38 bezeichnet, die in das Gehäuse eines Bremssattels 5 integriert oder eingebaut sind.

Da die nutzbare Längenänderung von Piezoelementen sehr begrenzt ist - sie liegt im Bereich von Zehntelmillimetern -, dabei aber sehr hohe Kräfte erzeugt werden, erfolgt die Zuspannung des Bremssattels 5 erfindungsgemäß durch eine Kombination eines Antriebs mit dem Elektromotor 40 und eines anschließenden Antriebs mit dem Piezoelement 26.

Der Elektromotor 40 treibt über eine elektrisch schaltbare Magnetkupplung 45 die Gewindemutter 29 an, welche die Drehbewegung des Elektromotors in eine Längsbewegung eines rohrförmigen Bremskolbens umsetzt, der an seinem Außenumfang mit einem Gewinde 28 versehen ist. In dem Bremskolben ist das Piezoelement 26 untergebracht, das auf die Rückenplatte eines inneren Bremsbelages drückt. Durch die Längsbewegung des Bremskolben mit dem Piezoelement wird die Zuspannung des Bremssattels 5 bewirkt, d. h. das Piezoelement 26 drückt den inneren Bremsbelag an die Bremsscheibe und aufgrund des Schwimmsattelprinzips wird dabei auch der äußere Bremsbelag mit der gleichen Kraft an die Scheibe gepreßt.

Der Elektromotor 40 ist sehr kostengünstig herzustellen, da er nur für ein kleines Drehmoment ausgelegt ist und nur über einen Wicklungsstrang und über keinerlei Kommutierungseinrichtungen verfügt. Somit können mit dem Elektromotor nur kleine Zuspannkräfte erreicht werden. Er dient daher hauptsächlich zur Überwindung des Lüftspiels und der mechanischen Spiele und Lose in der Anordnung. Der Aufbau höherer Bremskräfte wird durch das Piezoelement 26 vorgenommen, welches sich durch Anlegen einer elektrischen Spannung ausdehnt. Das die hohen Zuspannkräfte des Radbremsaktors 4 erzeugende Piezoelement 26 arbeitet im Vergleich zu mechanischen Getrieben mit einem sehr hohen Wirkungsgrad. Damit die Reaktionskräfte dieser erhöhten Bremskräfte die Gewindemutter 29 nicht zurückdrehen, ist die Gewindepaarung zwischen Gewindemutter 29 und Gewinde 28 selbsthemmend ausgelegt.

Eine Steuerung 38 empfängt - zum Beispiel von einem übergeordneten Steuergerät oder von einer Pedaleinheit - Sollwerte für die Zuspannkraft. Aus den Sollwerten und den gemessenen Istwerten (Zuspannkraft F_{P} und Drehwinkel Φ_{G} der Gewindemutter 29) werden die Stellgrößen (Motorstrom I_{Mot}, Strom der Magnetkupplung I_{Magn} und Spannung des Piezoelements U_{P}) für die Stellglieder 40, 45 und 26 des Radbremsaktors gebildet. Der Elektromotor 40 setzt den von der Steuerung eingeprägten Strom in ein Drehmoment um. Dieses Drehmoment wirkt über die schaltbare Magnetkupplung 45 auf das Gewindegetriebe 28-29, welches die Drehbewegung des Motors 40 in eine Längsbewegung und das Drehmoment in eine Längskraft F_{P} umsetzt. Durch die Längsbewegung wird das Piezoelement 26 an die Bremsbeläge gedrückt und dabei die Bremse vorgespannt. Der weitere Kraftaufbau F_{P} geschieht dann durch das Piezoelement 26, indem an dieses eine elektrische Spannung U_{P} gelegt wird. [Die hier verwendeten Formelzeichen sind weiter hinten in einer Liste zusammengefasst.]

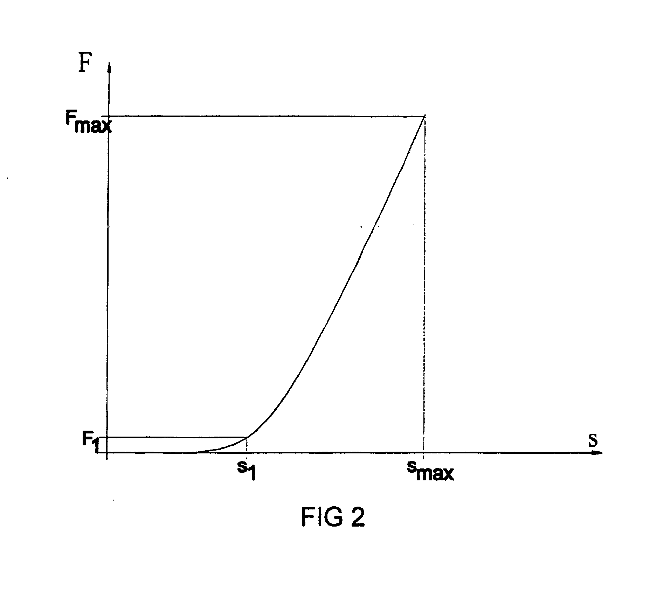

Aus Figur 2 wird der Zusammenhang zwischen der Zuspannkraft F des Bremssattels 5 und dem Weg s, den der Bremskolben beim Zuspannen der Bremse 2 zurücklegt, ersichtlich. Es ist deutlich zu erkennen, daß ein großer Anteil s₁ (bei üblichen Schwimmsätteln etwa zwischen 30 % und 50 %) des zum Erreichen der maximalen Zuspannkraft Fₘₐₓ notwendigen Weges sₘₐₓ in die Überwindung des Lüftspiels zwischen Scheibe und Bremsbelägen und bis zum Erreichen der verhältnismäßig kleinen Kraft F₁, mit der alle Lose in der Mechanik und den Bremsbelägen und Belagführungen überwunden werden, nahezu kraftlos oder bei sehr geringen Kräften zurückgelegt wird. Erst danach beginnt ein großer Kraftaufbau bei kleinen Wegänderungen.

Der Elektromotor 40 wird mit dem Strom I bestromt und entwickelt dabei das Drehmoment M wie oben ausgeführt. Dieses Drehmoment wird durch die Magnetkupplung 45 auf die Gewindemutter 29 übertragen. Dadurch bewegt sich der Bremskolben bis zum Weg s₁, bei dem die Zuspannkraft F₁ beträgt. An diesem Punkt halten sich die Reaktionskräfte des Bremssattels 5 und die Axialkraft des Bremskolbens die Waage, am Elektromotor herrscht ebenso Momentengleichgewicht, das heißt der Läufer dreht sich nicht mehr weiter, sondern bleibt nach der Drehung um den Winkel α stehen. Hierbei wird die Gewindesteigung so gewählt, daß bei dem Winkel α gerade der Weg S₁ zurückgelegt wird. Da der Elektromotor 40 sich nur um einen Bruchteil einer ganzen Umdrehung dreht, benötigt er keine Kommutierungseinrichtung.

Nach Erreichen der Zuspannkraft F₁ wird eine Spannung U an das Piezoelement 26 angelegt, das sich daraufhin in Längsrichtung ausdehnt und den weiteren Kraftaufbau übernimmt. Bei der Spannung Uₘₐₓ wird dann die maximale Zuspannungskraft Fₘₐₓ erreicht. Ein Zurückdrehen des Motors bzw. der Gewindemutter des Gewindegetriebes wird durch dessen Selbsthemmung vermieden. Da die Gewindepaarung 28, 29 selbsthemmend ausgelegt ist, kann der Elektromotor 40 dann wieder stromlos geschaltet werden, ohne den Wert der Zuspannkraft zu verändern. Dies wirkt sich sehr günstig auf die thermische Belastung und somit auch auf die Dimensionierung des Elektromotors 40 aus.

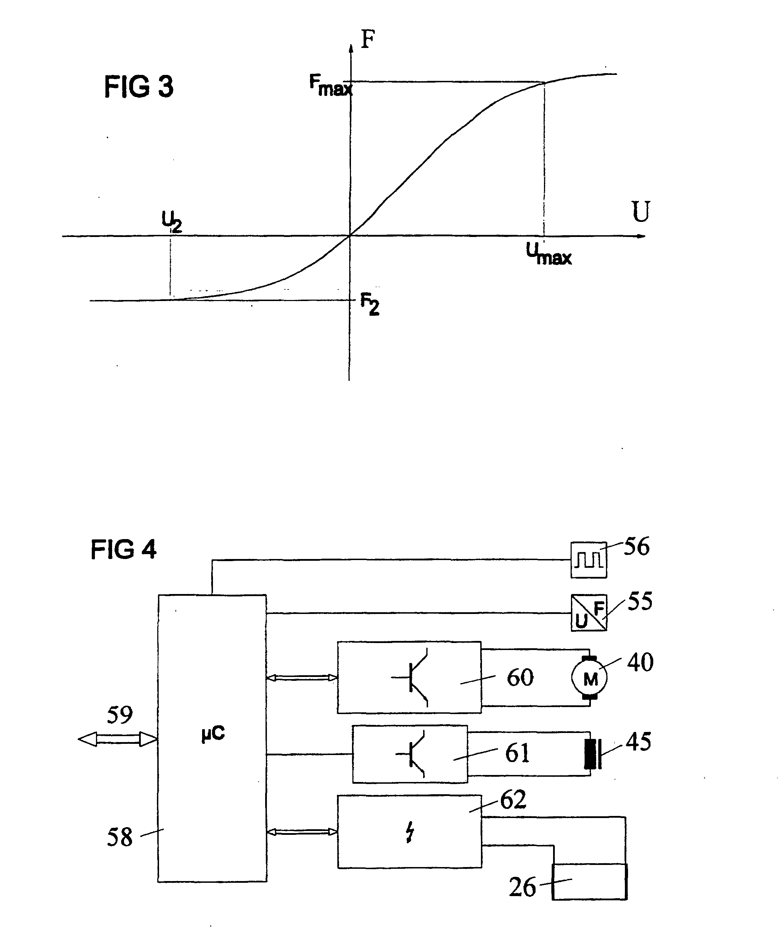

Beim Anlegen zum Beispiel einer Spannung U₂ (Figur 3, negative Halbachse) am Piezoelement verkürzt sich dieses so, daß es eine Kraft F₂ entwickeln wurde, wenn es in verkürztem Zustand in eine starre Vorrichtung kraftfrei eingepaßt werden würde und anschließend die elektrische Spannung auf Null reduziert werden würde. Dieser Effekt wird zum Erzeugen der erforderlichen Zuspannkraft im Feststellbremsmodus genutzt, wodurch keine elektrische Betriebsenergie mehr zum Aufrechterhalten der Zuspannkraft benötigt wird.

Aus Figur 4 ist ein Blockschaltbild der Steuerung des Radbremsaktors ersichtlich. Die Signale eines Kraftsensors 55 und eines Sensors 56 zum Erfassen des Drehwinkels der Gewindemutter 29 werden einer Steuereinheit 58, die der Steuerung 38 von Figur 1 entspricht und die vorzugsweise als Mikrorechnerschaltung µC ausgeführt ist, zugeführt. Diese Steuereinheit erhält von einem hier nicht dargestellten übergeordneten Steuergerät über Steuerleitungen 59 Stellbefehle oder Sollwerte für die Bremskraft. Aus diesen Sollwerten und den Istwerten der Sensoren 55, 56 werden Stellbefehle für einen ersten Stromsteller 60 zum Betrieb des Elektromotors 40, einen zweiten Stromsteller 61 zum Betrieb der Magnetkupplung und einen Spannungssteller 62 zum Erzeugen der Spannung für das Piezoelement 26 abgeleitet. Derartige Schaltungen sind allgemein bekannt - beispielsweise eine H-Brückenschaltung zum Betrieb des Elektromotors in beiden Drehrichtungen, Kaskadenschaltungen und DC-DC-Wandler für die Spannungsversorgung des Piezoelements und einfache Schalttransistoren zum Ein- und Ausschalten des Kupplungsmagneten 45 - sie werden deshalb hier nicht weiter erläutert.

Die Regelung der Zuspannkraft der Radbremsen, die über den Elektromotor 40 und das Piezoelement 26 aufzubringen ist, erfolgt nach einem Verfahren, das nachfolgend beschrieben wird. Dabei ist insbesondere zu berücksichtigen, daß ein Verschleiß der Bremsbeläge stattfindet, der kontinuierlich ausgeglichen werden soll, d. h. das Lüftspiel zwischen Scheibe und Belägen soll unabhängig vom Belagverschleiß konstant gehalten werden. Dieses Verfahren schließt mehrere Teilverfahren ein, die den verschiedenen Aktionen beim Betätigen der Bremsen entsprechen. Ein weiteres Teilverfahren ermöglicht den Einsatz des Radbremsaktors als Feststellbremse.

Der Ausgleich des Belagverschleißes erfolgt nicht nach jeder Betätigung der Bremse, sondern nur nach solchen, die mit einer nennenswert hohen Zuspannkraft erfolgten, d. h. genau dann, wenn das Piezoelement zum Zuspannkraftaufbau herangezogen wurde.

Der Radbremsaktor 4 wird gemäß folgendem Verfahren gesteuert:

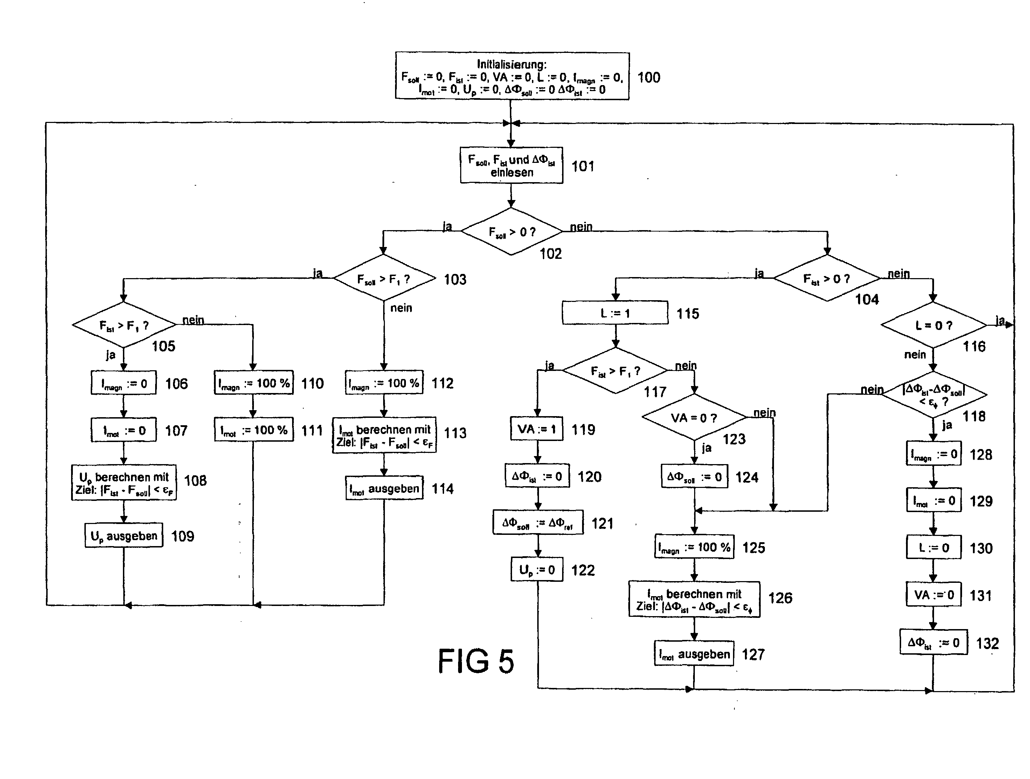

In einem Schritt 100 (Figur 5) wird eine Initialisierung - beispielsweise nach Betätigung der Zündung des Kraftfahrzeugs - durchgeführt und alle variablen Werte werden zu Null gesetzt. Danach werden in einem Schritt 101 der Sollwert für die Zuspannkraft Fₛₒₗₗ, der Istwert der Zuspannkraft Fᵢₛₜ mit dem Kraftsensor 55 und der Istwert des Läuferdrehwinkels ΔΦᵢₛₜ mit dem Drehwinkelsensor 56 eingelesen. In einem Schritt 102 wird dann entschieden, ob eine Bremskraft angefordert wird. Falls ja, wird zu einem Schritt 103 verzweigt und dort überprüft, ob die angeforderte Bremskraft größer als F₁ sein soll. Ist auch dies der Fall, wird in einem Schritt 105 geprüft, ob die bereits erreichte Zuspannkraft Fᵢₛₜ größer als F₁ ist. Ist dies gegeben, so hat der Läufer des Elektromotors bereits seinen Maximaldrehwinkel α erreicht.

Daraufhin wird die Magnetkupplung 45 geöffnet (Schritt 106) und der Motorstrom auf Null reduziert (Schritt 107). Die Lage des Bremskolbens ändert sich wegen der selbsthemmenden Gewindepaarung nicht. Danach wird gemäß dem Kennlinienverlauf nach Figur 3 ein Zielwert für die Spannung Uₚ des Piezoelements berechnet, so daß die Istkraft bis auf einen kleinen Differenzbetrag ε_{F} die Sollkraft erreicht (Schritt 108), und in einem Schritt 109 wird diese Spannung an das Piezoelement 26 angelegt, welches sich daraufhin ausdehnt und die Bremskraft in Richtung des gewünschten Sollwertes beeinflußt.

Anschließend'wird zu einem Schritt 101 zurückgesprungen, in dem die aktualisierten Soll- und Istwerte eingelesen und ggf. Korrekturberechnungen durchgeführt werden. Wurde im Schritt 105 dagegen erkannt, daß die Istkraft noch kleiner als die Kraft F₁ ist, wird zu einem Schritt 110 verzweigt, in dem die Magnetkupplung 45 geschlossen wird oder geschlossen gehalten wird, falls sie in vorhergehenden Programmdurchläufen bereits geschlossen wurde. In einem nachfolgenden Schritt 111 wird der Motorstrom auf seinen Maximalwert gesetzt, um den Läufer bis zu seinem Maximaldrehwinkel α zu drehen und somit die Kraft F₁ zu erreichen. Dann wird ebenfalls wieder zu Schritt 101 zurückgesprungen.

Wurde in dem Schritt 103 ermittelt, daß der Sollwert der Zuspannkraft kleiner als F₁ ist, so wird das Piezoelement 26 zum Aufbauen der Zuspannkraft nicht benötigt, der Kraftaufbau geschieht dann nur mit Hilfe des Elektromotors 40. Nachfolgend wird in einem Schritt 112 die Magnetkupplung geschlossen oder im geschlossenen Zustand gehalten, falls sie schon vorher betätigt wurde. Danach wird in einem Schritt 113 aus den (aus der Paralellanmeldung ersichtlichen) charakteristischen Gleichungen für das Motormoment und die Axialkraft der Spindel ein Vorgabewert für den Motorstrom dergestalt berechnet, daß die Istkraft bis auf einen kleinen Differenzbetrag ε_{F} den Sollwert erreicht. In einem Schritt 114 wird der Motorstrom dann dem Motor eingeprägt und danach zu dem Schritt 101 zurückgesprungen, um ggf. Korrekturen vorzunehmen.

Falls der Vergleich in dem Schritt 102 einen Sollwert von Null für die Zuspannkraft ergibt, wird zu einem Schritt 104 verzweigt, um zu prüfen, ob der Istwert größer Null ist oder nicht, d. h. ob die Bremse betätigt ist oder schon gelöst ist. Falls die Bremse betätigt ist, wird zu einem Schritt 115 verzweigt, in dem ein Zustandsindikator L (für Lüften der Bremse) auf 1 gesetzt wird. Im einem folgenden Schritt 117 wird der Istwert der Zuspannkraft mit der Kraft F₁ verglichen. Ist der Istwert größer als F₁, wird zu einem Schritt 119 verzweigt, in dem ein Zustandsindikator VA (für Verschleißausgleich) auf 1 gesetzt wird. Die Bremse wurde nämlich dann mit nennenswerter Zuspannkraft betätigt, so daß ein Verschleißausgleich angebracht ist. Dazu wird in einem Schritt 120 der Istwert des Läuferdrehwinkels ΔΦᵢₛₜ auf Null gesetzt und der Sollwert für den Läuferdrehwinkel auf einen festen Referenzwert ΔΦ_{ref} gesetzt (Schritt 121). Dies dient dazu, einen Verschleißausgleich vorzunehmen: Unabhängig vom vorherigen Läuferdrehwinkel wird immer um einen festen Winkelwert ΔΦ_{ref} zurückgestellt und somit ein gleichmäßiges Lüftspiel gewährleistet, mithin also ein stattgefundener Belagverschleiß ausgeglichen.

Zunächst wird jedoch die Piezospannung in einem Schritt 122 auf Null gesetzt und somit die Bremse weitgehend - d. h. bis auf die kleine Restspannkraft F₁, die von dem Elektromotor 40 erzeugt wird - entspannt. Danach wird zum Schritt 101 zurückgesprungen. Wurde in dem Schritt 117 festgestellt, daß die momentane Zuspannkraft bereits kleiner oder gleich der Kraft F₁ ist - das Piezoelement ist dann schon entspannt -, wird mit einem Schritt 123 weiterverfahren. Dort wird zunächst durch Abfrage des Zustandsindikators VA geprüft, ob ein Verschleißausgleich stattzufinden hat (VA = 1) oder nicht (VA = 0). Falls kein Verschleißausgleich stattfinden muß, wird in einem Schritt 124 der Sollwert für den Läuferdrehwinkel ΔΦₛₒₗₗ auf Null gesetzt, d. h. der Läufer dreht dann in seine Ausgangsposition vor der Bremsung zurück und es wird kein Belagverschleißausgleich vorgenommen.

Andernfalls wird unter Beibehaltung des Sollwertes ΔΦ_{ref} für den Verschleißausgleich direkt zu Schritt 125 gesprungen, indem die Magnetkupplung geschlossen wird oder im geschlossenen Zustand gehalten wird. Dann wird der Zielwert für den Motorstrom derart berechnet, daß der Läufer die Zielposition bis auf eine sehr kleine Abweichung ε_{Φ} erreichen soll (Schritt 126) und dieser Motorstrom wird dem Elektromotor eingeprägt (Schritt 127). Danach wird für ggf. erforderliche Korrekturen oder Anpassungen auf neue Sollwerte der Zuspannkraft nach Schritt 101 zurückgesprungen.

Wurde in dem Schritt 104 entschieden, daß die Bremse bereits gelöst ist, wird mit einem Schritt 116 fortgefahren, in dem überprüft wird, ob noch weiter gelüftet werden muß (L = 1) oder nicht (L = 0). Falls das beabsichtigte Lüftspiel schon erreicht ist, wird direkt zu dem Schritt 101 zurück gesprungen, andernfalls mit Schritt 118 fortgefahren. Dort wird überprüft, ob der Läufer seine beabsichtigte Ruheposition bis auf eine kleine zulässige Abweichung erreicht hat. Falls nicht, wird über eine Kette von Schritten 125, 126 und 127 der Läufer weiter zurückgedreht, andernfalls ist das vorgesehene Lüftspiel erreicht und der Bremsaktor hat seine Ruhestellung erreicht. Daher werden in den nachfolgenden Schritten 128, 129, 130, 131 und 132 die Magnetkupplung geöffnet, der Motorstrom unterbrochen, die Zustandsindikatoren L und VA zu Null gesetzt und der Läuferdrehwinkel auf den Wert Null zurückgesetzt. Schließlich wird zu dem Schritt 101 zurückgesprungen, um neue Sollwerte einzulesen.

Die Funktion des Bremsaktors 4 als Feststellbremse beruht auf folgender Vorgehensweise: Das Piezoelement 26 wird mit einer elektrischen Spannung beaufschlagt, deren Polarität der Polarität der Spannung, die zum Aufbau normaler Zuspannkräfte bei Betriebsbremsungen an das Piezoelement gelegt wird, entgegengesetzt ist und somit nicht zu einer Verlängerung des Piezoelements, sondern zu seiner Verkürzung führt. Dieses verkürzte Piezoelement 26 wird nun mittels des Elektromotors 40 und der Magnetkupplung 45 an die Bremsbeläge gedrückt. Danach wird die Spannung am Piezoelement abgeschaltet, woraufhin es sich wieder auf seine ursprüngliche Länge auszudehnen versucht und dabei eine entsprechend hohe Zuspannkraft erzeugt. Aufgrund der Selbsthemmung des Gewindegetriebes 28-29 können dann Magnetkupplung und Elektromotor stromlos geschaltet werden, so daß die Feststellbremswirkung einer mechanischen Verriegelung entspricht, die ohne elektrischen Leistungsbedarf beliebig lange aufrechterhalten werden kann.

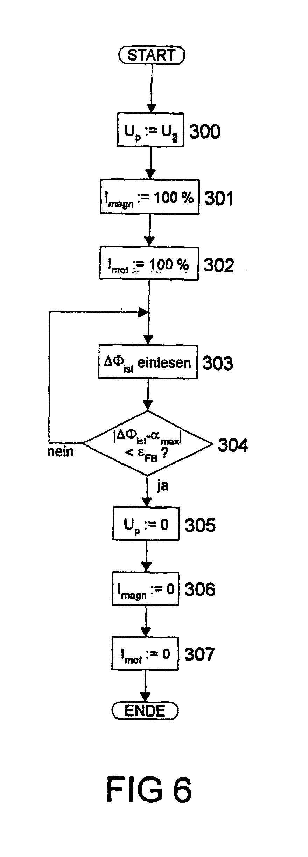

Die Betätigung der Feststellbremse geschieht nach folgendem Verfahren (Figuren 6, 7 und 8):

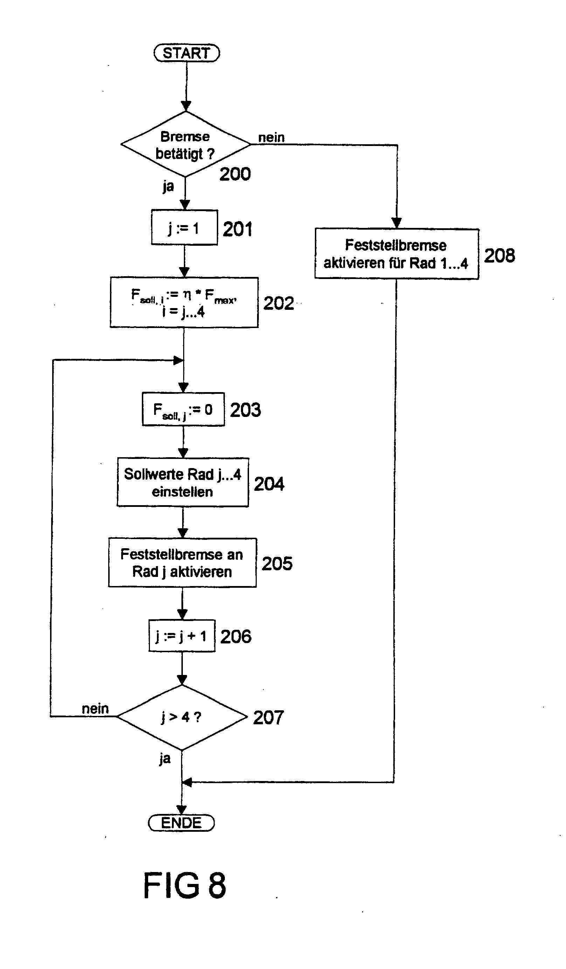

Nachdem in der zentralen Steuerung der Bremsanlage die Bedingungen für ein korrektes Betätigen der Feststellbremse (Stillstand aller Räder und Betätigungswunsch des Fahrers-in Figur 8 nicht dargestellt -) erkannt worden sind, wird das Teilverfahren nach Figur 8 gestartet. In einem Schritt 200 wird abgefragt, ob die Betriebsbremse betätigt ist, oder nicht - beispielsweise könnte die Bremse betätigt sein, um das Fahrzeug an einer Steigung oder an einem Gefälle zu halten.

Falls die Bremse nicht betätigt ist, wird in einem Schritt 208 ein Befehl an alle vier Räder zum Aktivieren der Feststellbremse gegeben, und auf jedem Radbremsaktor läuft daraufhin das Verfahren nach Figur 6 ab. Falls die Bremse betätigt ist, wird zunächst ein Zähler auf 1 gesetzt (Schritt 201). Danach werden die Sollwerte für die Zuspannkräfte aller Räder auf einen bestimmten Bruchteil η der maximalen Zuspannkraft gesetzt (Schritt 202). Dabei wird η so bemessen, daß das Fahrzeug auch bei voller Beladung an den größtmöglich auftretenden Steigungen und Gefällen mit nur drei betätigten Bremsaktoren sicher im Stillstand gehalten wird (beispielsweise wird η auf 35 % gesetzt ).

In einem Schritt 203 wird dann der Sollwert eines Rades, nämlich desjenigen, das durch einen Zähler j charakterisiert ist, auf Null gesetzt und die Sollwerte werden an die Räder übermittelt und dort durch das Verfahren nach Figur 5 eingestellt (Schritt 204). Das Rad mit der Zählernummer j ist dann im gelösten Zustand. In einem Schritt 205 wird dann für dieses Rad die Feststellbremse nach dem Verfahren nach Figur 6 aktiviert. Danach wird in einem Schritt 206 der Zähler um eins erhöht, in einem Schritt 207 überprüft, ob der Zähler den Wert 4 übersteigt - d. h. ob die Feststellbremse an allen vier Rädern bereits betätigt ist oder nicht - und in diesem Fall das Programm beendet. Andernfalls wird mit dem nächsten Rad fortgefahren.

Auf dem jeweiligen Radbremsaktor 4 läuft das Verfahren nach Figur 6 ab:
Zunächst wird an dem Piezoelement 26 eine Spannung U₂ angelegt (Schritt 300), worauf es sich verkürzt (vgl. Figur 3). Dann wird die Magnetkupplung 45 geschlossen (Schritt 301) und der Motor mit seinem Maximalstrom beaufschlagt (Schritt 302). In einem Schritt 303 wird der aktuelle Läuferdrehwinkel eingelesen und in einem nachfolgenden Schritt 304 mit dem Maximaldrehwinkel αₘₐₓ verglichen. Ist dieser bis auf sehr kleine zulässige Abweichungen ε_{FB} erreicht, wird mit einem Schritt 305 fortgefahren, andernfalls zu dem Schritt 303 zurückgesprungen.

In einem Schritt 305 wird die Piezospannung auf Null gesetzt, danach in Schritten 306 und 307 die Magnetkupplung geöffnet und der Motorstrom unterbrochen. Das Piezoelement dehnt sich wieder auf seine Ruhelage aus und spannt somit die Bremse zu. Wegen der selbsthemmenden Gewindepaarung zwischen der Gewindemutter und dem Bremskolben verharrt das System in diesem Zustand, ohne dass zur Erhaltung des Zustands noch weitere Energie benötigt würde. Die Feststellbremse ist damit aktiviert.

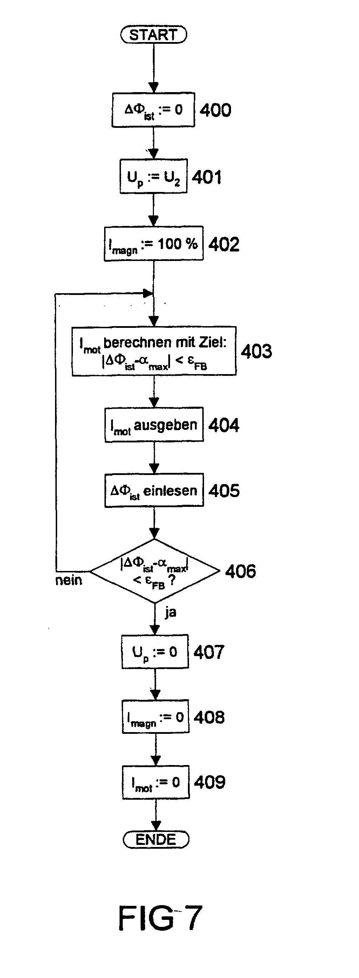

Das Lösen der Feststellbremse geschieht nach dem Verfahren gemäß Figur 7:
Der Läufer des Elektromotors 40 steht aufgrund des vorausgegangenen Prozesses der Aktivierung der Feststellbremse bei dem Maximalwinkel αₘₐₓ. Zunächst wird der Istwert des Läuferdrehwinkels zu Null gesetzt (Schritt 400). In einem Schritt 401 wird die Piezospannung auf den Wert U₂ gesetzt, das Piezoelement verkürzt sich entsprechend und verringert die Zuspannkraft am Bremssattel 5. Dann werden die Magnetkupplung 45 geschlossen (Schritt 402), der Zielwert für den Motorstrom so berechnet, daß der Läuferdrehwinkel sich bis auf eine kleine zulässige Abweichung um den Wert αₘₐₓ zurückdreht (Schritt 403), und dieser Strom wird dem Motor eingeprägt (Schritt 404). Danach wird in einem Schritt 405 der Istwert des Läuferdrehwinkels eingelesen und mit dem Winkel αₘₐₓ verglichen (Schritt 406). Falls die Abweichung größer als das zulässige Maß ε_{FB} ist, wird zwecks Korrektur zu dem Schritt 403 zurückgesprungen, andernfalls in einem Schritt 407 die Spannung am Piezoelement auf Null gesetzt, die Magnetkupplung geöffnet (Schritt 408) und der Motorstrom abgeschaltet (Schritt 409). Der Aktor hat damit seine Ruhestellung bei gelöster Bremse erreicht.

**In der Beschreibung verwendete Formelzeichen:**
- Fₛₒₗₗ: Sollwert der Zuspannkraft
- Fᵢₛₜ: Istwert der Zuspannkraft
- Fₘₐₓ: Maximalwert der Zuspannkraft
- F₁: Schwellwert der Zuspannkraft nach Diagramm in Fig. 4. Die (verhältnismäßig kleine) Axialkraft, bei der das Lüftspiel und alle Lose und Spiele in der Mechanik des Aktors überwunden sind.
- I_{magn}: Betriebsstrom des Elektromagneten für die Magnetkupplung
- Iₘₒₜ: Betriebsstrom des Motors zum Antrieb der Gewindemutter
- U_{P}: Betriebsspannung des Piezoelements
- U₂: Spannungswert für das Piezoelement bei der Aktivierung der Feststellbremse (Spannungswert dient zur Verkürzung des Piezoelements),
- Δφₛₒₗₗ: Sollwert Läuferdrehwinkel
- Δφᵢₛₜ: Istwert Läuferdrehwinkel
- Δφ_{ref}: Referenzwert für die Änderung des Läuferdrehwinkels zur Lüftspieleinstellung
- αₘₐₓ: Maximalwert des Motordrehwinkels
- ε_{F}: zulässige betragsmäßige Abweichung zwischen Sollwert und Istwert der Zuspannkraft
- ε_{φ}: zulässige betragsmäßige Abweichung zwischen Sollwert und Istwert des Motordrehwinkels
- ε_{FB}: zulässige betragsmäßige Abweichung zwischen Istwert und Maximalwert αₘₐₓ des Motordrehwinkels (beim Betätigen der Feststellbremse)
- L: Zustandsindikator für das Lüften der Bremse (L=0: Bremse gelüftet, L=1: Bremse nicht gelüftet)
- VA: Zustandsindikator für den Verschleißausgleich (VA=0: Verschleißausgleich nicht durchführen, VA=1: Verschleißausgleich durchführen)
- η: Gewichtsfaktor zur Berechnung der Zuspannkraft beim Betätigen der Feststellbremse (0 < η < 1)
- i,j: Schleifenzähler für die Verfahren zur Betätigung der Feststellbremse

## Patentansprüche

1. Verfahren zum Steuern eines elektromechanischen Radbremsaktors (4) in einem Kraftfahrzeug, der einen von einem Elektromotor (40) über eine selbsthemmend ausgelegte Gewindepaarung (28, 29) in Richtung auf eine Bremsscheibe angetriebenen Bremskolben enthält, durch den zwei Bremsbeläge gegen eine Bremsscheibe gedrückt oder von dieser gelöst werden, wobei
- der Bremskolben durch den Elektromotor (40) mit einer unter einem vorgegebenen Wert (F1) liegenden Zuspannkraft bewegt wird,
- der Bremskolben nach Erreichen des vorgegebenen Wertes (F1) der Zuspannkraft durch ein piezoelektrisches Element (26) mit einer über dem vorgegebenen Wert liegenden Zuspannkraft gegen die Bremsbeläge gedrückt wird, und
- der Elektromotor (40) bei Betriebsbremsungen, bei denen die Zuspannkraft über dem vorgegeben Wert (F1) liegt stromlos geschaltet wird,
**dadurch gekennzeichnet, dass** zur Realisierung einer Feststellbremsfunktion
• das Piezoelement (26) mit einer elektrischen Spannung beaufschlagt wird, deren Polarität der Polarität der Spannung, die zum Aufbau normaler Zuspannkräfte bei Betriebsbremsungen an das Piezoelement gelegt wird, entgegengesetzt ist,
• das dabei verkürzte Piezoelement (26) danach durch den Elektromotor (40) und eine Magnetkupplung (45) an die Bremsbeläge gedrückt wird, und
• danach die Spannung an dem Piezoelement (26) abgeschaltet wird, woraufhin es sich wieder auf seine ursprüngliche Länge auszudehnen versucht und dabei eine hohe Zuspannkraft erzeugt.

2. Verfahren nach Anspruch 1 oder 2, **dadurch gekennzeichnet, dass** ein Verschleißausgleich immer dann durchgeführt wird, wenn die Bremse mit nennenswerter Zuspannkraft betätigt worden ist, indem der Läufer des Elektromotors um einen festen Winkelwert (ΔΦ_{ref}) zurückgestellt und damit ein gleichmäßiges Lüftspiel erreicht wird.

3. Verfahren nach einem der vorhergehenden Ansprüche **dadurch gekennzeichnet, dass** an einer Steigung oder an einem Gefälle die Feststellbremse nacheinander an jedem Radbremsaktor aktiviert wird, während die restlichen Aktoren das Kraftfahrzeug im Betriebsbremsmodus im Stillstand halten.

## Claims

1. Method for controlling an electromechanical wheel brake actuator (4) in a motor vehicle, said wheel brake actuator (4) containing a brake piston driven by an electric motor (40) via a threaded mating (28, 29), designed to be self-locking, in the direction of a brake disk, by which brake piston two brake pads are pressed against a brake disk or released therefrom, where
- the brake piston is moved by the electric motor (40) with a clamping force lying below a predetermined value (F1),
- the brake piston is pressed against the brake pads on reaching the predetermined value (F1) of the clamping force by a piezoelectric element (26) with a clamping force lying above the predetermined value, and
- the electric motor (40) is switched to a de-energised state in the event of service braking in which the clamping force lies above the predetermined value (F1),
**characterised in that** in order to carry out a parking brake function
• an electrical voltage is applied to the piezo element (26), the polarity of which is the opposite of the polarity of the voltage applied to the piezo element in order to build up normal clamping forces in the event of service braking,
• the piezo element (26) shortened in this way is then pressed by the electric motor (40) and a magnetic coupling (45) onto the brake pads, and
• the voltage is then switched off at the piezo element (26), whereupon it again attempts to expand to its original length and thereby generates a high clamping force.

2. Method according to Claim 1 or 2, **characterised in that** wear compensation is always carried out if the brake was activated with significant clamping force, **in that** the rotors of the electric motor are reset by a fixed angular value (ΔΦ_{ref}) and thus a uniform slack is achieved.

3. Method according to one of the preceding claims, **characterised in that** on an incline or on a gradient the parking brake is activated in succession on each wheel brake actuator, whereas the remaining actuators hold the motor vehicle at rest in service brake mode.

## Revendications

1. Procédé de commande d'un actionneur de frein sur roue électromécanique (4) dans un véhicule automobile, qui contient un piston de frein entraîné par un moteur électrique (40) dans la direction d'un disque de frein par le biais d'une paire filetée (28, 29) conçue de manière autobloquante, grâce auquel deux garnitures de frein sont pressées contre un disque de frein ou sont écartées de celui-ci, dans lequel
- le piston de frein est déplacé par le moteur électrique (40) avec une force de serrage inférieure à une valeur prédéterminée (F1),
- le piston de frein est pressé contre les garnitures de frein après l'obtention de la valeur prédéterminée (F1) de la force de serrage par un élément piézoélectrique (26) avec une force de serrage supérieure à la valeur prédéterminée et
- le moteur électrique (40) est commuté sans courant dans le cas de freinages fonctionnels dans lesquels la force de serrage est supérieure à la valeur prédéfinie (F1),
**caractérisé en ce que** pour réaliser une fonction de frein de stationnement,
• l'élément piézoélectrique (26) est sollicité par une tension électrique dont la polarité est opposée à la polarité de la tension qui est appliquée à l'élément piézoélectrique pour la génération de forces de serrage normales lors de freinages fonctionnels,
• l'élément piézoélectrique (26) raccourci en résultant est ensuite pressé par le moteur électrique (40) et un accouplement magnétique (45) contre les garnitures de frein, et
• ensuite la tension appliquée à l'élément piézoélectrique (26) est coupée, et celui-ci tente alors de se rallonger à nouveau à sa longueur initiale, en produisant ainsi une force de serrage élevée.

2. Procédé selon la revendication 1 ou 2, **caractérisé en ce qu'**une compensation de l'usure est toujours réalisée lorsque le frein a été actionné avec une force de serrage de valeur nominale, en ramenant le rotor du moteur électrique à une valeur angulaire fixe (ΔΦ_{ref}) et en obtenant ainsi un jeu uniforme.

3. Procédé selon l'une quelconque des revendications précédentes, **caractérisé en ce que**, en montée ou en descente, le frein de stationnement est activé successivement sur chaque actionneur de frein sur roue, tandis que les actionneurs restants maintiennent immobile le véhicule automobile dans le mode de frein de stationnement.
